# EUROPEAN PATENT APPLICATION

(11) **EP 4 083 247 A1**
(43) Date of publication of application: **02.11.2022**
(21) Application number: 20907504.3
(22) Date of filing: 25.12.2020
(51) Int. Cl.: C22C 21/06, C22F 1/00, C22F 1/047

(54) **ALUMINUM ALLOY FOIL**

(30) Priority: 25.12.2019 JP 2019234194
(71) Applicant: Ma Aluminum Corporation, Tokyo, 105-8546 (JP); Dai Nippon Printing Co., Ltd., Tokyo 162-8001 (JP)
(72) Inventor: SUZUKI, Takashi, Susono-shi, Shizuoka 410-1127 (JP); ENDO, Masaya, Susono-shi, Shizuoka 410-1127 (JP); HAYASHI, Shinji, Tokyo 162-8001 (JP); HIRAKI, Kenta, Tokyo 162-8001 (JP); YASUDA, Daisuke, Tokyo 162-8001 (JP); YAMAZAKI, Masayasu, Tokyo 162-8001 (JP)
(74) Representative: Hoffmann Eitle
(86) International application number: PCT/JP2020/048734
(87) International publication number: WO 2021/132563

(57) **Abstract**

An aluminum alloy foil having a composition contains Si: 0.5 mass% or less, Fe: 0.2 mass% or more and 2.0 mass% or less, Mg: more than 1.5 mass% and 5.0 mass% or less, and Al balance containing inevitable impurities. In the aluminum alloy foil, Mn is desirably 0.1 mass% or less in the inevitable impurities, and preferably, the tensile strength is 180 MPa or more, the elongation is 15% or more, and the average crystal grain diameter is 25 µm or less.

## Description

### [Technical Field]

The present invention relates to an aluminum alloy foil which can be used as a packaging material or the like.

Priority is claimed on Japanese Patent Application No. 2019-234194, filed December 25, 2019, the content of which is incorporated herein by reference.

### [Background Art]

Packaging materials which use an aluminum foil, such as battery exteriors, are generally in the form of a resin film laminated on both sides or one side. The aluminum foil exhibits a barrier property, and the resin film mainly exhibits the rigidity of a product. In the related art, pure aluminum or an Al-Fe alloy such as JIS A8079 and 8021 is used for the aluminum foil used for the packaging material. Since a soft foil of pure aluminum or Al-Fe alloy generally has low strength, for example, in a case where the foil is thinned, the handling property may be decreased due to wrinkles and bending, or cracks and pinholes may be generated in the aluminum foil due to impact. In the aluminum foil, an increase of strength is generally effective to improve these concerns.

For example, Patent Document 1 proposes a high-strength foil of an Al-Fe-Mn alloy which actively contains Mn.

### [Citation List]

### [Patent Document]

### [Patent Document 1]

Japanese Unexamined Patent Application, First Publication No. 2016-079487

### [Summary of Invention]

### [Technical Problem]

However, the addition of Mn to the Al-Fe alloy has a high risk of decrease of formability, since an intermetallic compound is coarsened and an Al-Fe-Mn-based giant crystal is generated.

The present invention has been made to address the background of the above circumstances, and an object of the present invention is to provide an aluminum alloy foil having excellent formability and strength.

### [Solution to Problem]

That is, in the aluminum alloy foil of the present invention, an aluminum alloy foil of a first aspect has a composition containing Si: 0.5 mass% or less, Fe: 0.2 mass% or more and 2.0 mass% or less, Mg: more than 1.5 mass% and 5.0 mass% or less, and Al balance containing inevitable impurities.

In the invention according to the first aspect, in the aluminum alloy foil of a second aspect, the amount of Mn is restricted to 0.1 mass% or less in the inevitable impurities.

In the invention according to the first or second aspect, in the aluminum alloy foil of a third aspect, a tensile strength is 180 MPa or more and an elongation is 15% or more.

In the invention according to any one of the first to third aspects, in the aluminum alloy foil of a fourth aspect, an average crystal grain diameter is 25 µm or less.

### [Advantageous Effects of Invention]

According to the present invention, it is possible to provide an aluminum alloy foil having an elongation property while ensuring formability.

### [Brief Description of Drawings]

Fig. 1 is a diagram showing a planar shape of a square punch used in test for a limit of a molding height in an example of the present invention.
Fig. 2 is a photomicrograph of a surface of an aluminum alloy foil used in an evaluation of corrosiveness in the example of the present invention.

### [Description of Embodiments]

An aluminum alloy foil of the present embodiment has a composition contains (or composed of) Si: 0.5 mass% or less, Fe: 0.2 mass% or more and 2.0 mass% or less, Mg: more than 1.5 mass% and 5.0 mass% or less, and Al balance containing inevitable impurities.

The contents specified in the present embodiment will be described hereinafter.

### - Fe: 0.2 mass% or more and 2.0 mass% or less

Fe crystallizes as an Al-Fe-based intermetallic compound at the time of casting, and in a case where a size of the compound is large, Fe becomes a nucleation site for recrystallized grain at the time of annealing, so that there is an effect of refining recrystallized grains. In a case where the amount of Fe is lower than the lower limit, a distribution density of the coarse intermetallic compound is decreased, an effect of crystal grain refinement is low, and the final crystal grain size distribution also becomes non-uniform. In a case where the amount of Fe exceeds the upper limit, the effect of crystal grain refinement is saturated or rather reduced, and a size of the Al-Fe-based intermetallic compound generated at the time of casting extremely increases, as a result, elongation and rollability of foil decrease. Accordingly, the amount of Fe is determined within the range described above. For the same reason, the amount of Fe is preferably set to 0.5 mass% as the lower limit, and for the same reason, the amount of Fe is more preferably to 1.0 mass% as the lower limit and 1.8 mass% as the upper limit.

### - Mg: More than 1.5 mass% and 5.0 mass% or less

Mg is dissolved in aluminum and can increase a strength of a soft foil by solid solution strengthening. In addition, since Mg is easily dissolved in aluminum, there is a low risk that the intermetallic compound is coarsened and the formability or rollability is decreased, even if Mg is contained together with Fe. In a case where the amount of Mg exceeds 1.5 mass%, the foil becomes hard and the formability or rollability is decreased, but an aluminum soft foil having an extremely high strength can be obtained. In a case where the amount of Mg is lower the lower limit, the improvement in strength becomes insufficient, and in a case where the amount of Mg exceeds the upper limit, the aluminum alloy foil becomes extremely hard, as a result, rollability or formability significantly decrease.

For the same reason, the amount of Mg is desirably in a range of more than 1.5 mass% and 4.5 mass% or less.

In addition, it is also confirmed that the addition of Mg improves corrosion resistance to an electrolyte of a lithium ion secondary battery. Although the details of the mechanism are not clear, as the additional amount of Mg is large, it is difficult that the aluminum alloy foil and lithium in an electrolyte react with each other. Accordingly, it is possible to suppress pulverization of the aluminum alloy foil or generation of through holes.

### - Si: 0.5 mass% or less

In a case where the amount of Si is small, Si may be added to increase the strength of the foil, but in the present embodiment, in a case where Si exceeds 0.5 mass%, a size of an Al-Fe-Si-based intermetallic compound generated at the time of casting becomes large and the elongation and formability of the foil are decreased. In a case where the thickness of the foil is small, breaking occurs from the intermetallic compound as a starting point and the rollability is also decreased. In addition, in a case where a large amount of Si is added to an alloy containing a large amount of Mg such as the aluminum alloy foil of the present embodiment, the generation amount of Mg-Si-based precipitates increases, and there is a possibility of causing deterioration of strength, since rollability or a solid solution amount of Mg decrease. For the same reason, the amount of Si is desirably suppressed to 0.2 mass% or less. As the amount of Si decreases, formability, rollability, degree of refinement of crystal grains, and ductility tend to improve.

The lower limit value of the amount of Si is desirably 0.001 mass% and more desirably 0.005 mass%.

### - Inevitable impurities

In addition, the aluminum alloy foil of the present embodiment can contain inevitable impurities such as Cu or Mn. For example, the amount of each of these impurities is desirably 0.1 mass% or less. In the present embodiment, the upper limit of the amount of the inevitable impurities is not limited to the numerical values described above.

However, since Mn is difficult to be dissolved in aluminum, unlike Mg, it cannot be expected that the strength of the soft foil is significantly increased by the solid solution strengthening. In addition, in a case where a large amount Mn is added to an alloy containing a large amount of Fe, there is a high risk of coarsening of the intermetallic compound or generation of an Al-Fe-Mn-based giant intermetallic compound, and there is a possibility to decrease rollability or formability. Therefore, the amount of Mn is desirably 0.1 mass% or less.

The amount of Mn is more desirably 0.08 mass% or less, and the lower limit value of the amount of Mn is desirably 0.001 mass% and more desirably 0.005 mass%.

### - Tensile strength: 180 MPa or more

A tensile strength of 180 MPa or more is required to dramatically improve impact resistance and piercing strength of existing foils such as JIS A8079 and 8021. For the same reason, the tensile strength is desirably 200 MPa or more. However, since the formability decreases as the tensile strength increases, in a case where the formability is important, it is better to suppress the tensile strength.

The tensile strength can be achieved by selecting a composition and optimizing the crystal grain size.

The upper limit value of the tensile strength is desirably 350 MPa. In addition, the tensile strength is desirably 200 MPa or more and 310 MPa or less.

### - Elongation: 15% or more

The effect of elongation with respect to formability varies greatly depending on a molding method, and elongation alone does not determine formability. In a stretch forming often used for the aluminum packaging material, as the elongation of the aluminum alloy foil is high, the formability is more advantageous. Accordingly, the elongation is desirably 15% or more.

The property of the elongation can be achieved by selecting a composition and refinement of the crystal grain size.

The upper limit value of the elongation is desirably 40%. In addition, the elongation is more desirably 15% or more and 30% or less.

### - Average crystal grain diameter: 25 µm or less

Since the crystal grains of the soft aluminum alloy foil become finer, it is possible to suppress rough skin on a foil surface when it is deformed, and high elongation and high formability associated therewith can be expected. The effect of this crystal grain size increases as the thickness of the foil decreases. In order to realize a high elongation property and high formability associated therewith, the average crystal grain diameter of the recrystallized grains of the aluminum alloy is desirably 25 µm or less.

In addition, the lower limit value of the average crystal grain diameter is desirably 3 µm, and the average crystal grain diameter is more desirably 9 µm or more and 20 µm or less.

The average crystal grain diameter can be achieved by selecting the composition, and optimizing manufacturing conditions of a homogenizing treatment or a cold rolling reduction ratio.

The average crystal grain diameter herein is obtained by observing a surface of the aluminum alloy foil with an optical microscope and calculating an average crystal grain diameter of an equivalent circle diameter by a cutting method using a linear test line or a circular test line.

Hereinafter, an example of a method for manufacturing the aluminum alloy foil of the present embodiment will be described.

An ingot of an aluminum alloy having a composition composed of Si: 0.5 mass% or less, Fe: 0.5 mass% or more and 2.0 mass% or less, Mg: more than 1.5 mass% and 5.0 mass% or less, and Al balance containing inevitable impurities, and optionally contained Mn: 0.1 mass% or less is cast by a general method such as a semi-continuous casting method. The obtained ingot is homogenized at 480°C to 540°C for 6 to 12 hours.

Generally, the homogenization treatment of the aluminum material is performed at 400°C to 600°C for a long time (for example, 12 hours). However, as the present embodiment, when the crystal grain refinement by adding Fe is considered, a heat treatment is desirably performed at 480°C to 540°C for 6 hours or longer. In a case where the temperature is lower than 480°C, the crystal grain refinement is insufficient, and in a case where the temperature exceeds 540°C, the crystal grain is coarsened. In a case where the treatment time is shorter than 6 hours, the homogenization treatment is insufficient.

After the homogenization treatment, hot rolling is performed to obtain an aluminum alloy plate having a desired thickness. The hot rolling can be performed by a general method, but a winding temperature of the hot rolling is desirably equal to or higher than a recrystallization temperature, specifically 300°C or higher. In a case where the winding temperature is lower than 300°C, it is not desirable because fine Al-Fe-based intermetallic compounds having a diameter of 0.3 µm or less are precipitated, recrystallized grains and fiber grains are mixed after the hot rolling, and the crystal grain size after intermediate annealing and final annealing is non-uniform, and the elongation property may be decreased.

After the hot rolling, the cold rolling, the intermediate annealing, and the final cold rolling are performed to set the thickness to 5 to 100 µm, thereby obtaining the aluminum alloy foil of the present embodiment. The final cold rolling reduction ratio is desirably 90% or more.

The intermediate annealing during the cold rolling may not be performed but may be performed in some cases. The intermediate annealing has two types of method such as a batch annealing of putting a coil into a furnace and holding the coil therein for a certain time, and a method of rapidly heating and cooling a material by a continuous annealing line (hereinafter, also referred to as CAL annealing). In a case where the intermediate annealing is performed, any method may be used, but in a case of achieving refinement of the crystal grains and increasing strength thereof, the CAL annealing is desirably performed, and in a case where the formability is prioritized, the batch annealing is preferably performed.

For example, in the batch annealing, the temperature can be set to 300°C to 400°C for 3 hours or more, and in the CAL annealing, the conditions of a temperature rising rate: 10°C/sec to 250°C/sec, a heating temperature: 400°C to 550°C, no holding time or holding time: 5 seconds or shorter, and a cooling rate: 20°C to 200°C/sec can be used. However, in the present embodiment, the presence/absence of the intermediate annealing, the conditions for performing the intermediate annealing, and the like are not limited to specific conditions.

After rolling the foil, the final annealing is performed to obtain a soft foil. The final annealing after the foil rolling may be generally performed at 250°C to 400°C. However, in a case of further increasing the effect of corrosion resistance by Mg, it is desirable to hold it at a high temperature of 350°C or higher for 5 hours or longer.

In a case where the final annealing temperature is low, the softening is insufficient, and a concentration of Mg on the foil surface is also insufficient, which may decrease the corrosion resistance. In a case where the temperature exceeds 400°C, Mg is excessively concentrated on the surface of the foil, and there is a concern that the corrosion resistance may be decreased due to discoloration of the foil or changes in the properties of an oxide film to cause minute cracks. In a case where the final annealing time is shorter than 5 hours, the effect of the final annealing is insufficient.

The obtained aluminum alloy foil has a tensile strength of 180 MPa or more and an elongation of 15% or more at room temperature (15°C to 25°C). In addition, the average crystal grain diameter is 25 µm or less.

The obtained aluminum alloy foil has both high strength and high formability, and can be used as various molding materials for packaging materials and the like. Particularly, in a case where it is used as an exterior material or a current collector for a lithium ion battery, excellent corrosion resistance to an electrolyte is exhibited.

### [Examples]

Hereinafter, examples of the present invention will be described.

An ingot of an aluminum alloy composed of each composition shown in Table 1 (the balance is Al and other inevitable impurities) was prepared, homogenized under the conditions shown in the same table, and then hot-rolled at a finishing temperature of 330°C to obtain a plate material having a thickness of 3 mm. After that, through the cold rolling, the intermediate annealing, and the final cold rolling, a sample of an aluminum alloy foil having a thickness of 40 µm and a width of 1200 mm was prepared. The method of intermediate annealing was shown in Table 1. The CAL annealing of Example 11 was performed under the conditions of a temperature rising rate of 40°C/sec, a heating temperature of 460°C, a holding time of 1 second, and a cooling rate of 40°C/sec. In a column of the cold rolling in Table 1, the plate thickness immediately before the intermediate annealing and the cold rolling reduction ratio up to the plate thickness are shown.

The following tests or measurements were performed on the manufactured aluminum alloy foils of Examples 1 to 13 and Comparative Examples 14 to 18, and the results are shown in Table 2.

### - Tensile strength and elongation

Both tensile strength and elongation were measured by a tensile test. The tensile test was performed based on JIS Z2241 (based on ISO 6892-1) at a tensile speed of 2 mm/min with a universal tensile tester (AGS-X 10 kN manufactured by Shimadzu Corporation) by collecting JIS No. 5 test pieces from a sample so that the elongation in a direction of 0° with respect to the rolling direction can be measured.

The calculation of the elongation is as follows. First, before the test, two lines are marked in the center of the length of the test piece in a vertical direction of the test piece at intervals of 50 mm, which is a gauge distance. After the test, the fracture surface of the aluminum alloy foil was matched to measure the distance between marks, and an elongation amount (mm) obtained by subtracting the gauge distance (50 mm) from that was divided by the gauge distance (50 mm) to obtain the elongation (%).

### - Average crystal grain diameter

The surface of the aluminum alloy foil was electrolytically polished at a voltage of 20 V using a mixed solution of 20% by volume perchloric acid + 80% by volume ethanol, and then anodized in Barker's solution under the condition of a voltage of 30 V. Regarding the test material after the treatment, the crystal grains of the recrystallized grains of the aluminum alloy were observed with an optical microscope. The average crystal grain diameter of the equivalent circle diameter was calculated from a captured image by a cutting method using a linear line test line.

### - Piercing strength

A needle having a diameter of 1.0 mm and a tip shape radius of 0.5 mm was pierced into an aluminum alloy foil having a thickness of 40 µm at a speed of 50 mm/min, and a maximum load (N) until the needle penetrated the foil was measured. Here, a piercing strength of 11.0 N or more was regarded as a good piercing resistance which was regarded as A, and a piercing strength of less than 11.0 N was regarded as B.

### - Limit of molding height

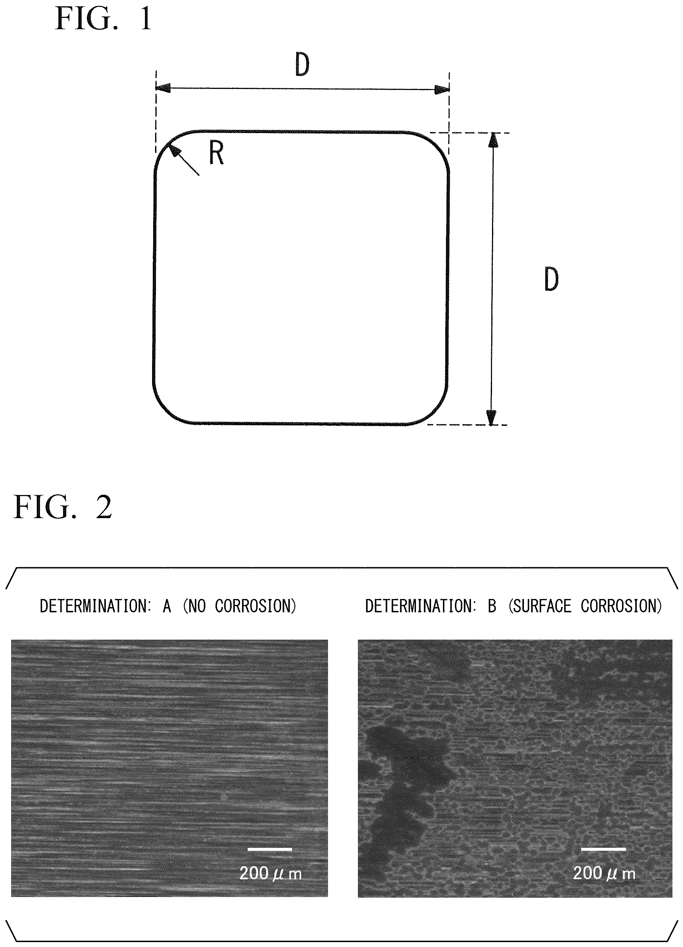

The molding height was evaluated by a square tube molding test. The test was performed with a universal thin plate molding tester (model 142/20 manufactured by ERICHSEN), and an aluminum alloy foil having a thickness of 40 µm was formed using a square punch (side length D = 37 mm, chamfer diameter R of corner = 4.5 mm) having a shape shown in Fig. 1. As the test conditions, a wrinkle suppressing force was 10 kN, the scale of an ascending speed (molding speed) of the punch was 1, and mineral oil was applied as a lubricant to one surface of the foil (the surface to which the punch hits). The punch that rises from a bottom of a device hits the foil, and the foil was molded, but a maximum increasing height of the punch that can be molded without cracks or pinholes when three consecutive moldings were performed was defined as the limit molding height (mm) of the material. The height of the punch was changed at intervals of 0.5 mm. Here, an overhang height of 5.0 mm or more was regarded as good formability which is determined as A, and the overhang height of less than 5.0 mm was regarded as B.

### - Evaluation of corrosiveness

152 g of lithium hexafluorophosphate was dissolved in 1 L of propylene carbonate/diethylene carbonate = 1/1 (volume ratio) to prepare an electrolyte of 1 mol/L. Next, each aluminum alloy foil used in Examples 1 to 13 and Comparative Examples 14 to 18 was set on a positive electrode of a 200 mL bipolar beaker cell, metallic lithium was set on a negative electrode, and the electrolyte described above was put. In this state, after applying a potential difference of 0.1 V for 1 hour, the surface of the aluminum alloy foil was visually observed with a microscope. As shown in the photomicrograph of Fig. 2 (observation magnification of 200 times), the aluminum alloy foil having a corroded surface was regarded as B, and the aluminum alloy foil having a surface not changed was regarded as A. On the surface of the corroded aluminum alloy foil (determination: B), a compound with lithium is generated, and a state where the surface is raised due to volume expansion is observed. The results of each test material are shown in Table 2.

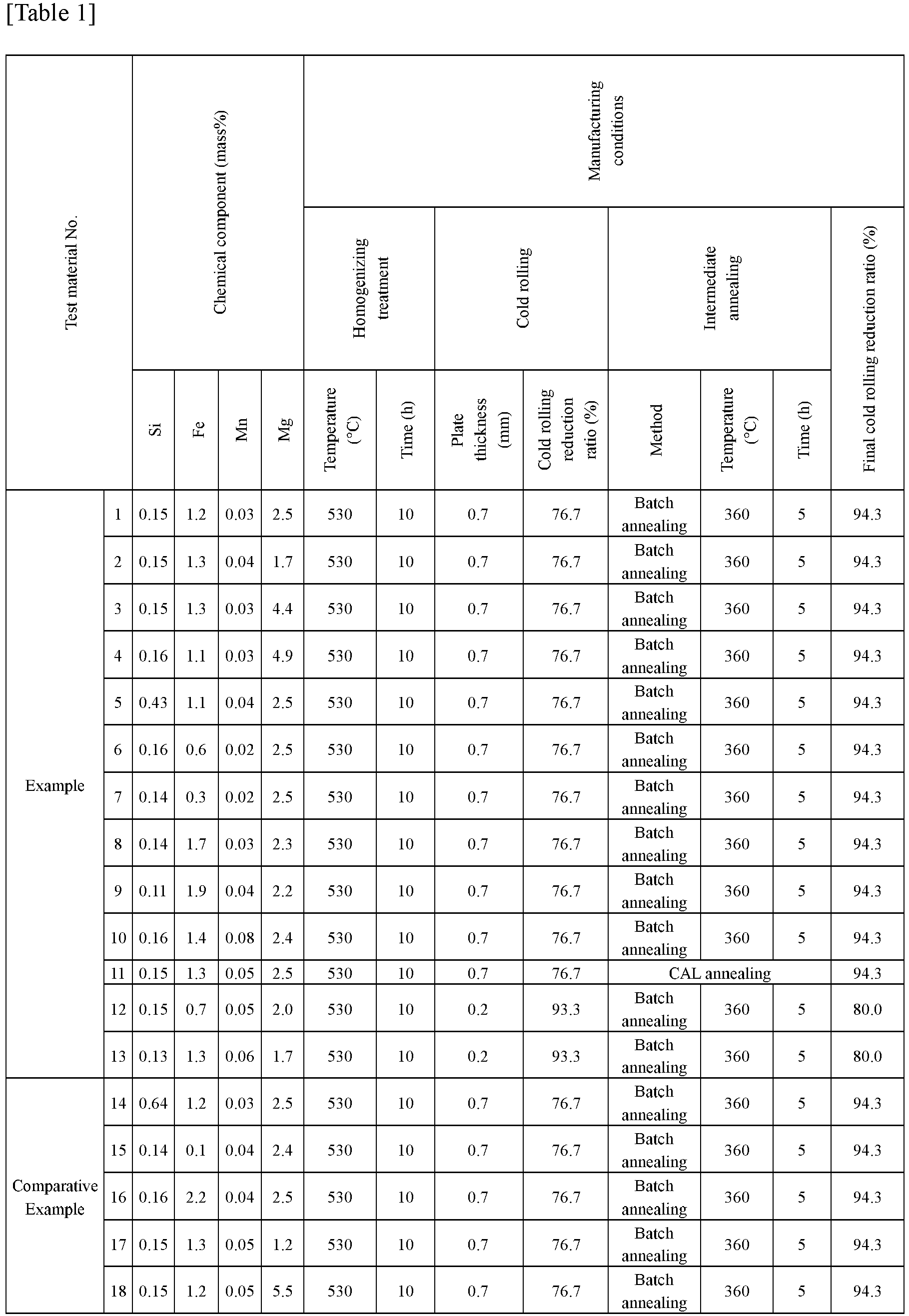

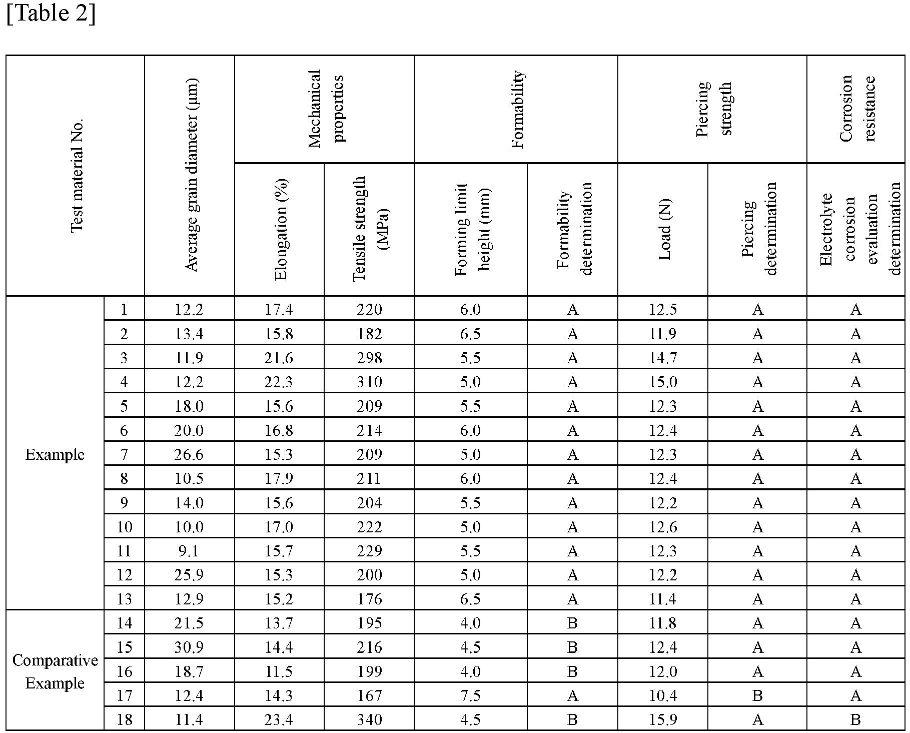

Hereinabove, the present invention was described based on the embodiments and the examples, but the invention is not limited to the contents of the embodiments, and suitable change of the embodiments can be performed in a range not departing from the scope of the invention.

## Claims

1. An aluminum alloy foil having a composition comprising:
Si: 0.5 mass% or less, Fe: 0.2 mass% or more and 2.0 mass% or less, Mg: more than 1.5 mass% and 5.0 mass% or less, and Al balance containing inevitable impurities.

2. The aluminum alloy foil according to Claim 1,
wherein an amount of Mn is restricted to 0.1 mass% or less in the inevitable impurities.

3. The aluminum alloy foil according to Claim 1 or 2,
wherein a tensile strength is 180 MPa or more and an elongation is 15% or more.

4. The aluminum alloy foil according to any one of Claims 1 to 3,
wherein an average crystal grain diameter is 25 µm or less.
